# FASCICULE DE BREVET EUROPEEN

(11) **EP 2 331 315 B1**
(45) Date de publication et mention de la délivrance du brevet: **20.03.2013**
(21) Numéro de dépôt: 09740410.7
(22) Date de dépôt: 29.07.2009
(51) Int. Cl.: B29C 61/00, B65B 61/24, B29C 71/02, B67C 3/04

(54) **PROCEDE DE TRAITEMENT D'UN CONTENANT A PAROI MINCE EN MATIERE PLASTIQUE, REMPLI A CHAUD ET DISPOSITIF ASSOCIE**
VERFAHREN ZUR BEHANDLUNG EINES HEISS BEFÜLLBAREN, DÜNNWANDIGEN KUNSTSTOFFBEHÄLTERS UND ZUGEHÖRIGE VORRICHTUNG
METHOD OF TREATING A HOT FILLED PLASTIC THIN WALLED CONTAINER AND ASSOCIATED DEVICE

(30) Priorité: 29.07.2008 FR 0855198
(43) Date de publication de la demande: 15.06.2011
(73) Titulaire: Plastipak Packaging, Inc., Plymouth, MI 48170 (US)
(72) Inventeur: OUTREMAN, Jean-Tristan, 13240 Septèmes-les-Vallons (FR)
(74) Mandataire: Arat, Dogan
(86) Numéro de dépôt international: PCT/FR2009/051526
(87) Numéro de publication internationale: WO 2010/012956

(56) Documents cités:
- WO-A-2006/136706
- DE-A1-102005 042 638
- FR-A- 2 130 138
- FR-A- 2 896 232
- US-B1- 6 502 369

## Description

La présente invention concerne un procédé de traitement d'un contenant à paroi mince en matière plastique ainsi qu'un dispositif associé nécessaire pour la mise en oeuvre dudit procédé.

On connaît par le brevet européen EP 1893523 B1 un procédé de remplissage d'un contenant à paroi mince.

Ce procédé propose d'utiliser les propriétés du contenant et sa capacité à libérer des contraintes liées à sa fabrication.

Ainsi le procédé prévoit d'utiliser un contenant à paroi mince ayant des contraintes résiduelles issues de sa fabrication.

Les contenants en matière plastique sont issus de façon quasi exclusive d'une fabrication par extrusion/soufflage d'une préforme en polyéthylène téréphtalate ou PET.

De ce fait, lors de la déformation à chaud de cette préforme pour lui faire atteindre les dimensions et formes définitives, le contenant final emmagasine des contraintes qui se trouvent figées par un refroidissement rapide dudit contenant, généralement par soufflage d'air, en sortie d'extrusion/soufflage. Même s'il se produit un certain retrait du contenant au refroidissement, retrait qui est pris en compte pour la réalisation des moules, la forme conférée par le moule au contenant est très proche de celle du moule et les contraintes sont figées aux températures d'utilisation. Ces contenants sont prévus et actuellement utilisés pour recevoir des produits froids tels que des eaux minérales.

La température de travail lors de l'extrusion soufflage est de l'ordre de 100 à 120 °C. Néanmoins, lorsqu'il est mentionné remplissage à chaud, la plage de températures concernées pour le liquide varie de 60 à 95°C, soit une température suffisante pour éliminer les organismes pathogènes mais inférieure à la température de fabrication de ce contenant.

Les contraintes engendrées résultent d'un étirage longitudinal lié à l'action d'une tige d'étirage et du gonflage basse pression au début puis du gonflage forte pression du contenant en fin de cycle.

Le contenant à paroi mince ainsi utilisé dans cette innovation, objet de la demande de brevet, rappelée en préambule est ainsi mis en oeuvre pour du remplissage à chaud, ce qui n'est pas sa destination première puisqu'il est couramment utilisé actuellement pour les eaux minérales.

Le fond du contenant doit, par contre, être adapté pour ne pas se déformer mais de nombreuses solutions connues de l'homme de l'art permettent de rendre le fond indéformable aux températures et pression/dépression concernées. Ainsi, un fond dit pétaloïde reste indéformable dans les conditions d'exploitation qui vont être détaillées ci-après.

De même le contenant peut subir un traitement thermique particulier pour le rendre un peu plus résistant aux hautes températures afin de recevoir un liquide aux températures nécessaires pour la destruction des microorganismes pathogènes.

Le procédé de remplissage à chaud consiste à obturer le contenant aussitôt après le remplissage, ce qui assure un traitement sanitaire du contenant, à refroidir le contenant et son contenu. Ce remplissage et ce refroidissement provoquent une déformation du contenant car la rétraction du liquide refroidi provoque une dépression à l'intérieur du contenant dont le volume est resté inchangé.

Le contenant est alors impropre à la vente du fait de ce phénomène de collapse lié à la dépression. Le contenant est difficile à saisir car flasque, difficile à stocker car il présente une très mauvaise tenue à la compression et sa forme est totalement inesthétique donc non commercialisable.

Le procédé selon la demande européenne antérieure citée ci-avant prévoit alors une étape de relâchement des contraintes internes du contenant, ce relâchement tendant à ramener le contenant à la forme de la préforme dont il est issu donc à provoquer un rétreint et une diminution correspondante du volume du contenant. Ce relâchement des contraintes est obtenu par une montée en température, au-delà de la température de remplissage à chaud du seul contenant.

Ce rétreint du volume du contenant provoque alors une mise en pression interne du contenant, ce qui a pour conséquence directe de redonner audit contenant sa forme première, régulière et de conférer une rigidité avant ouverture au contenant rempli et bouché. Cette rigidité autorise une manipulation aisée et permet de le rendre résistant à des efforts de compression notamment liés à des palettisations et des gerbages de tels contenants.

Il est à préciser que dans ce procédé, le relâchement des contraintes est obtenu dans le mode de réalisation décrit par chauffage discriminant, c'est-à-dire que l'enveloppe est chauffée rapidement pour que les contraintes se relâchent sans que le contenu liquide soit lui-même porté en température.

La présente invention propose un procédé de traitement adapté pour générer un relâchement des contraintes dans un tel contenant à paroi mince rempli et bouché à chaud ainsi que le dispositif associé.

Il convient en effet de prévoir un procédé et un dispositif qui assurent un relâchement des contraintes à des cadences d'embouteillage à chaud, 10 000 à 50 000 bouteilles/heure pour donner un ordre d'idées, qui conduit à des relâchements de contraintes homogènes et qui est totalement fiable et reproductible.

La difficulté est également de tenir compte des conditions économiques et donc de réaliser les étapes de remplissage et de bouchage des contenants avec le meilleure rendement surtout s'il s'agit d'étapes nécessitant un apport d'énergie. De plus, il se pose également un problème très important visant à conserver intacts les marquages en relief du contenant, tels que des noms, logos......

Le procédé selon la présente invention est maintenant décrit en détail ainsi que le dispositif associé permettant la mise en oeuvre dudit procédé.

Cette description est effectuée en regard des dessins annexés sur lesquels les différentes figures représentent :
- figure 1 : une vue schématique du poste de positionnement des contenants,
- figure 2 : une vue schématique du poste de mise en pression mécanique,
- figure 3 : une vue schématique du poste de traitement thermique,
- figure 4 : une vue d'un synoptique de mise en oeuvre du dispositif selon le procédé de la présente invention avec une représentation parallèle du contenant, et
- figure 5 : une vue d'une variante de réalisation des demi-coquilles.

Le procédé consiste à partir d'un contenant 10 à paroi mince, comprenant un goulot 12 et un fond 14, par exemple un fond pétaloïde lui permettant de résister à des déformations liées aux pressions et dépressions mises en oeuvre dans le procédé de remplissage et de bouchage à chaud selon la présente invention.

Ce contenant est donc préalablement rempli de façon connue d'un liquide 16 ayant été préalablement chauffé à des températures acceptables par le liquide et permettant d'assurer la destruction des microorganismes pathogènes.

On note que lors du remplissage, l'intérieur du corps du contenant et son bouchon se trouvent également traités bactériologiquement par la chaleur induite par la présence du liquide.

Le procédé consiste à partir d'un tel contenant rempli à chaud, obturé par un bouchon 18 et refroidi soit naturellement, soit de façon forcée par une douche d'eau froide, le résultat étant un contenant rempli d'un liquide exempt d'organismes pathogènes, à température ambiante, déformé par la dépression engendrée par la contraction du liquide, avec un goulot non déformé, un fond également non déformé lui conférant sa stabilité.

Bien entendu, le procédé s'applique à tout contenant même si le fond est déformable et le goulot également, même si au moment du dépôt la demande est essentiellement sur des contenants avec un fond indéformable apte à rester stable.

Le procédé, connu par le brevet européen EP 1893523 B1 au nom du même déposant, consiste à transférer des calories directement au contenant 10, plus spécifiquement à sa paroi mince, en limitant très fortement le chauffage du liquide car on renouvellerait le cycle et le refroidissement du liquide provoquerait de nouveau une dépression.

A cet effet, le procédé selon la présente invention consiste, préalablement au traitement thermique à exercer un effort mécanique sur la surface externe de la paroi mince du contenant déformé par le remplissage à chaud pour générer une pression intérieure afin de compenser au moins la dépression à laquelle il est soumis et lui redonner une forme géométrique stable.

Selon une autre caractéristique dudit procédé, il est prévu de transférer des calories à la paroi mince dudit contenant, au plus près d'au moins une zone dudit contenant de façon à provoquer un relâchement des contraintes de la paroi mince dans cette zone et donc une mise en pression de l'intérieur du contenant dans son ensemble.

Le procédé prévoit un positionnement du contenant par son fond et son goulot de façon à assurer une mise en référence dudit contenant suivant son axe longitudinal.

Le procédé selon l'invention prévoit aussi au moins deux étapes de transfert de calories et une rotation du contenant entre ces deux transferts.

Un dispositif particulièrement adapté pour la mise en oeuvre de ce procédé est maintenant décrit en détail suivant un mode réalisation particulier, non limitatif. Le dispositif est, de façon industrielle intégré de préférence en sortie de chaîne de fabrication de contenants à paroi mince par extrusion soufflage et après le poste de remplissage à chaud et de bouchage, et encore plus particulièrement en sortie du poste de refroidissement des contenants ainsi remplis et bouchés à chaud.

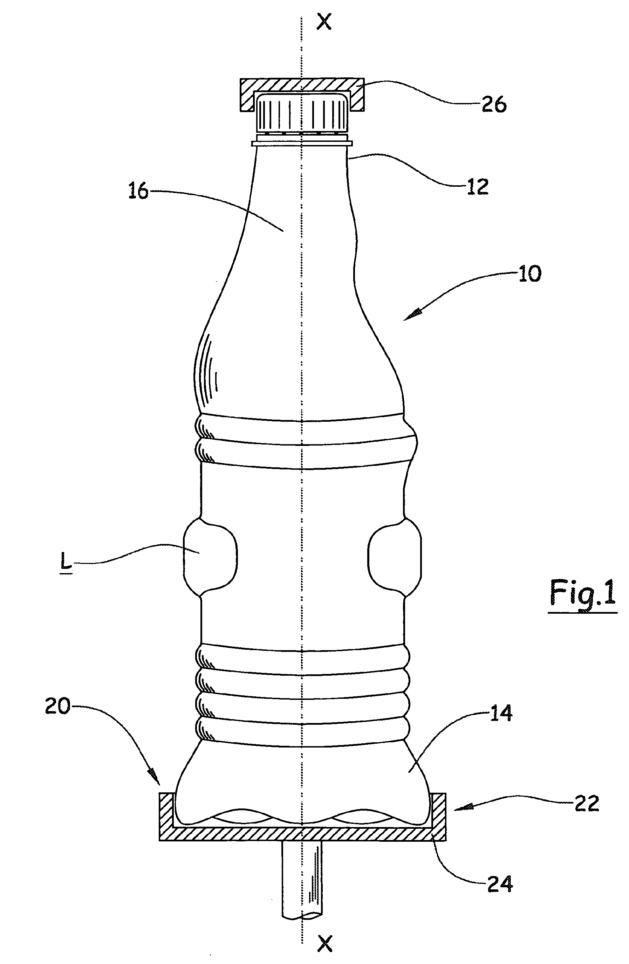

La description est effectuée en regard des figures 1 à 4.

Le dispositif comprend un poste 20 de positionnement des contenants 10 par le fond 14 et le goulot 12 surmonté du bouchon, représenté sur la figure 1.

Ce poste 20 de positionnement comprend une succession d'unités de réception 22 de contenants.

Dans ce mode de réalisation, chaque unité 22 de réception comporte une coupelle 24 de guidage et de mise en rotation dans laquelle repose le fond 14 du contenant et une tête 26 de guidage recevant le goulot 12.

Le centre de chaque coupelle 24 est aligné avec le centre de la tête 26 de façon à définir un axe longitudinal X-X prévu pour être confondu avec l'axe longitudinal du contenant. Ce poste de positionnement assure un centrage même si le contenant est lui-même déformé et affecté par des phénomènes de collapse.

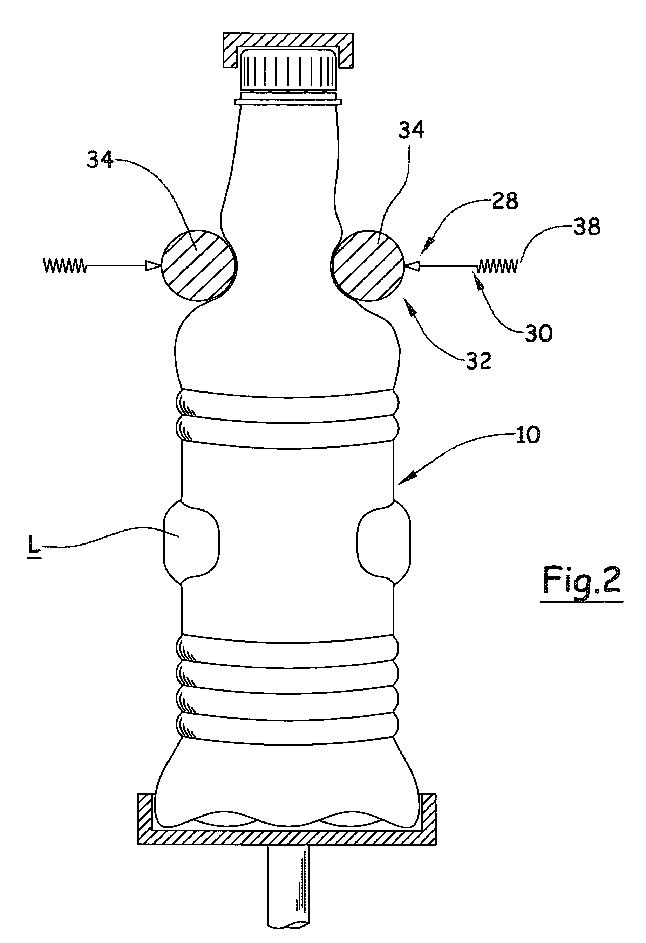

Le dispositif comprend un poste 28 de mise en pression mécanique du contenant, représenté sur la figure 2.

De façon préférentielle mais non limitative, ce poste de mise en pression comprend des moyens 30 mécaniques de mise en pression du contenant. Ces moyens 30 mécaniques de mise en pression comprennent des presseurs 32 composés de patins 34 d'appui prévus pour venir se plaquer sur la paroi mince du contenant 10 et des moyens 36 pour exercer un effort sur ces patins tels que des ressorts 38.

Selon un mode de réalisation, ces patins 34 sont des barres rondes, orientées suivant l'axe de défilement de la ligne, de façon à venir presser sur le contenant sans marquage, comme il sera décrit ci-après.

De tels patins présentent l'avantage de permettre d'exercer un effort sur la paroi même si celle-ci est déformée par les phénomènes de collapse.

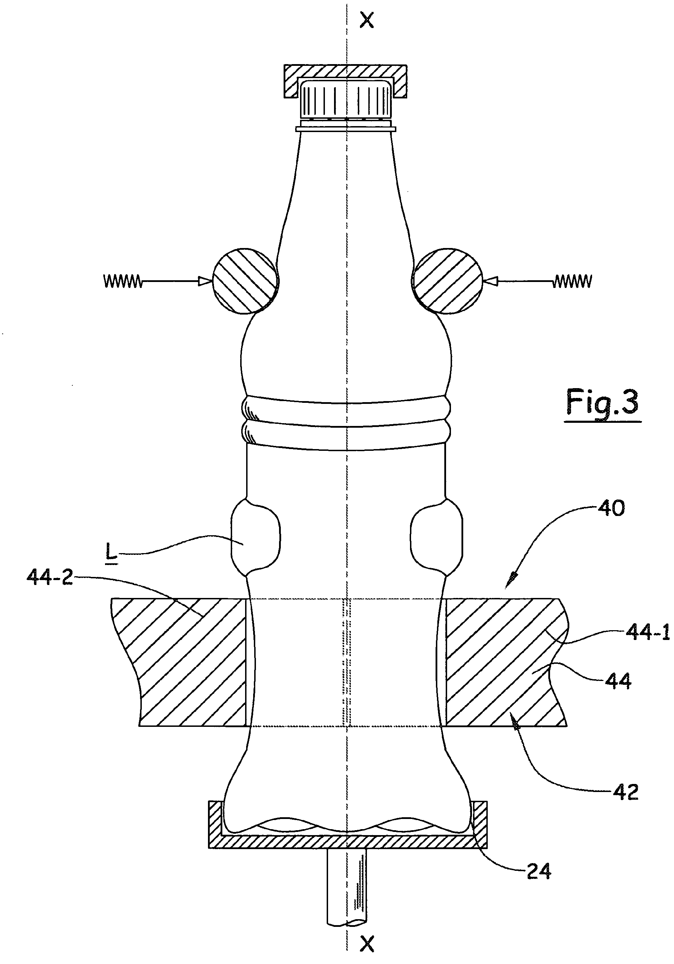

Le dispositif est complété par un poste 40 de traitement thermique représenté sur la figure 3. Ce poste 40 de traitement thermique comprend au moins une paroi 42 chaude, mobile entre deux positions la première dite d'ouverture, écartée du contenant 10 et la seconde dite de fermeture, proche et/ou au contact du contenant. Cette paroi est chauffée par tout moyen adapté à des températures permettant le relâchement des contraintes figées dans le contenant lors de la fabrication.

Cette paroi 42 chaude couvre au moins une zone du contenant.

Selon un mode préférentiel de réalisation du dispositif, la paroi 42 est en forme. Ainsi, la paroi chaude est une coquille 44 de forme conjuguée de celle de la zone concernée du contenant.

De façon encore plus préférentielle, la paroi 42 chaude comporte deux demi coquilles 44-1 et 44-2, de façon à venir se positionner autour du contenant dans sa position de fermeture.

On note que les deux demi coquilles sont centrées par rapport à l'axe longitudinal X-X, ceci dans les deux positions d'ouverture et de fermeture.

Les deux demi coquilles 44-1 et 44-2 viennent en butée l'une contre l'autre en position fermée afin d'éviter tout interstice susceptible de marquer le contenant.

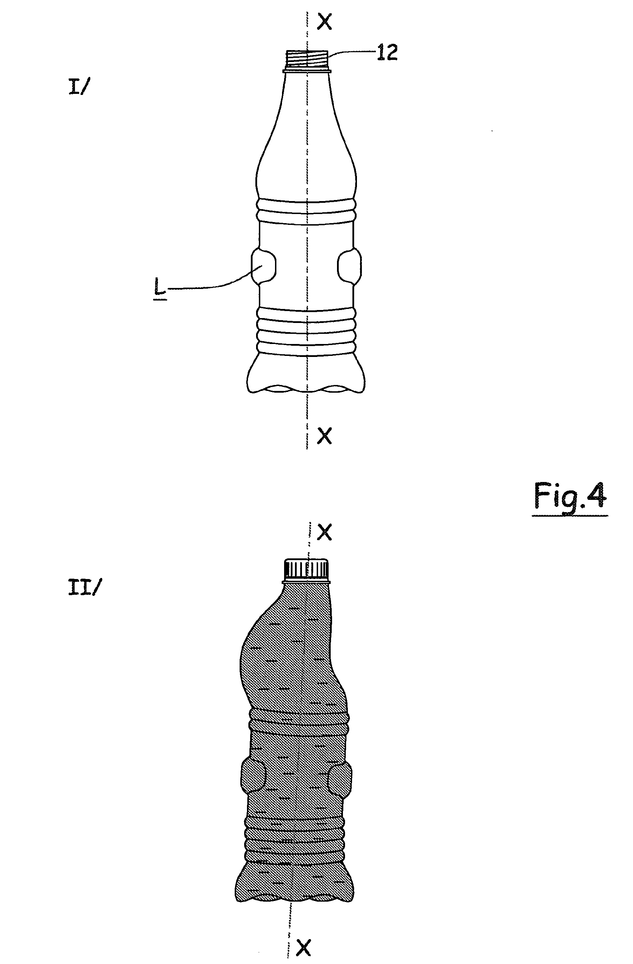

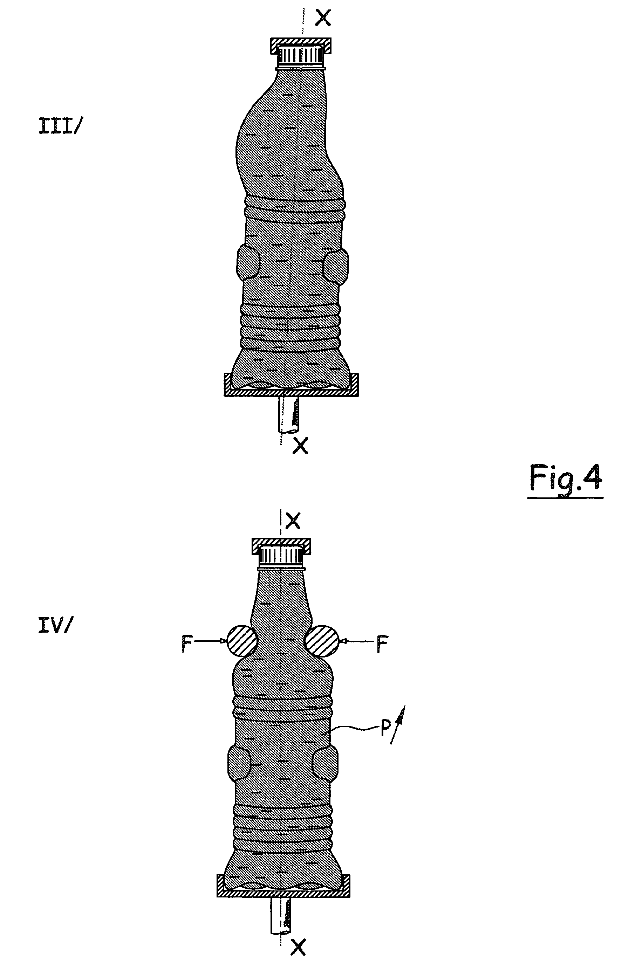

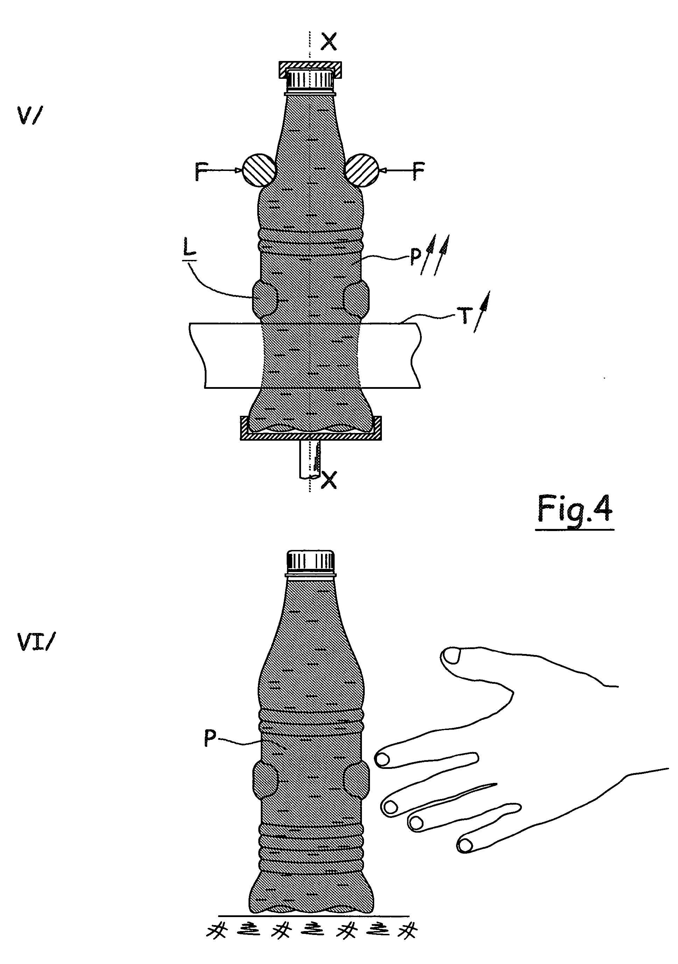

On se reporte à la figure 4 pour décrire la mise en oeuvre du procédé à travers un synoptique.

Sur cette figure 4, on a représenté à l'étape I, le contenant 10 vide, sorti d'extrusion soufflage. Ce contenant a la forme donnée et représentée sur cette figure à savoir une forme générale cylindrique avec un corps comprenant un logo L en relief en partie basse du corps du contenant avec des cannelures et une partie haute comportant des cannelures.

Sur la figure 4 étape II, le contenant a été rempli à chaud et bouché. Le contenant a été refroidi et se trouve être flasque car le liquide s'est contracté et son volume a diminué engendrant une dépression dans le contenant bouché qui confère cet état flasque à ce contenant et à son contenu.

Ce phénomène de collapse s'accompagne d'une déformation de la géométrie du contenant.

Le contenant 10 ainsi collapsé est référencé sur le poste de positionnement, étape III afin que son axe de révolution soit confondu avec l'axe X-X de positionnement.

Le fond et le goulot avec son bouchon sont alors centrés.

Dès lors, à l'étape IV, le contenant 10 est soumis à une mise en pression mécanique au poste 28, les patins 34 d'appui sont plaquées sur la paroi mince du contenant 10 par des ressorts 38. La pression exercée est donc constante et continue. Cette pression mécanique des patins, comme montré sur la représentation du contenant, est ponctuelle, déforme le contenant au droit des patins et conduit à une remise en forme de ce contenant pour toutes les parties non soumises à la pression mécanique.

En effet la pression mécanique se traduit par une déformation locale du contenant qui engendre une augmentation de la pression interne du contenant. La pression exercée doit être suffisante pour compenser la dépression liée à la contraction du liquide après remplissage à chaud et refroidissement et pour générer cette pression interne.

A l'étape V, le contenant ainsi remis en forme se trouve parfaitement axé et le contour extérieur est de nouveau au profil initial. Le contenant 10 peut alors être soumis au transfert de calories pour assurer un relâchement des contraintes.

Les demi-coquilles sont en position ouverte et viennent se fermer autour du contenant, au droit de la zone correspondante.

Le relâchement des contraintes est extrêmement rapide, quelques secondes, et se produit donc uniquement dans cette zone.

Le corps du contenant prend donc la forme de la coquille dans la zone concernée tandis que le reste du contenant conserve sa forme initiale.

Dans le cas présent la zone concernée est la partie basse du contenant de façon à conserver intacte la partie médiane qui porte le logo.

Dans cette partie basse, le relâchement des contraintes provoque un rétreint volumique et donc une mise en pression de l'intérieur du contenant. Cette mise en pression est adaptée pour compenser d'une part la pression mécanique exercée et conserver une pression interne une fois la pression mécanique interrompue d'autre part.

La pression mécanique résiduelle doit être suffisante pour donner au contenant une rigidité nécessaire à sa préhension et à sa résistance à la compression sans pour autant conduire à un contenant trop rigide au contact et à la préhension, étape VI.

De plus, la pression interne doit être conservée dans une plage telle que l'ouverture du bouchon ne provoque pas un échappement d'air trop important qui pourrait induire des écoulements du contenu.

On constate que le rétreint nécessaire est donc très faible en amplitude volumique pour atteindre le résultat souhaité. Ainsi le fond pétaloïde n'est pas soumis à des pressions susceptibles de le retourner.

Afin de donner un exemple, sur une bouteille de 500 ml, le rétreint est de 8%, la température de chauffe des demi coquilles est de 200°C pour donner un ordre d'idées.

Le transfert de calories est exercé directement sur la paroi et pendant une durée tellement courte que l'échauffement du contenu est négligeable, de l'ordre de quelques secondes, entre 2 et 10 secondes pour donner une plage de valeurs.

Il est aussi possible de prévoir un transfert fractionné des calories en au moins deux fractions et une mise en rotation du contenant entre les deux fractions transférées, soit au sein d'un même poste soit au sein de deux postes successifs. En sortie de l'étape V, on dispose d'un contenant à paroi mince, de géométrie et au profil souhaités, rempli d'un contenu ayant subi un traitement par la chaleur et ayant traité par la chaleur ledit contenant, dont les parties à motifs ou à cannelures rigidifiantes restent non déformées, d'une rigidité générale suffisante pour en permettre la préhension et le stockage par gerbage en assurant une reprise des efforts de compression.

Le contenant peut alors être étiqueté et palettisé.

Le dispositif a été décrit dans un mode de réalisation préférentiel, mais il est possible de prévoir des variantes de réalisation sans pour autant sortir du cadre de la présente invention.

C'est ainsi que la position d'application de la pression mécanique est choisie en fonction des possibilités à savoir en fonction du profil du contenant, de la zone qui doit être traitée et qui doit rester libre d'accès par la paroi chaude, notamment par les demi coquilles, sachant que cette pression mécanique peut être exercée en tout point, son effet étant réparti sur l'ensemble du contenant. Les moyens 36 pour exercer un effort sur les patins, en l'occurrence les ressorts 38, peuvent être remplacés par des vérins permettant un ajustement de la pression exercée.

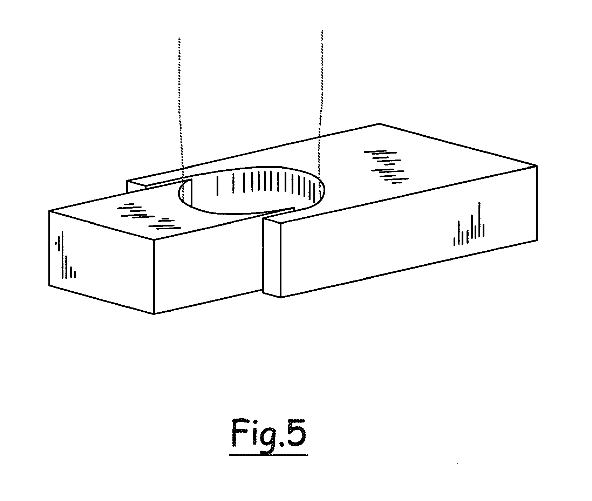

De même, il est possible de prévoir des demi coquilles qui sont inter pénétrantes, ce qui supprime le plan de joint et évite la mise en rotation du contenant et le transfert fractionné des calories. Une telle réalisation est symbolisée sur la figure 5.

Le procédé mis en oeuvre notamment à travers le dispositif proposé permet d'ouvrir le bouchon sans pour autant provoquer le débordement du contenu car le corps présente une rigidité suffisante même après ouverture du bouchon. Cette raideur est liée à la présence de cannelures et autres raidisseurs associés au contenant lui-même et liée à la conception même du contenant.

Un tel procédé et un tel dispositif permettent une mise en oeuvre adaptée et industrielle du procédé objet de la demande de brevet européen N° 06 764 803. Le contenant rempli de son contenu ainsi obtenu étant à paroi mince nécessite peu de matière première pour sa fabrication, une garantie sanitaire et engendre des coûts réduits de recyclage.

Le procédé selon la présente invention induit des surcoûts énergétiques très réduits du fait que le transfert est direct, rapide sans porter de nouveau le contenu en température alors qu'il vient d'être refroidi juste après son remplissage, ce qui aurait été un non sens industriel.

Les modifications d'une ligne de fabrication en aménageant un dispositif comme celui décrit dans le cadre de la présente invention sont relativement simples sans surcoût important tandis que les gains en utilisant des contenants à parois minces sont très significatifs.

## Revendications

1. Procédé de traitement d'un contenant à paroi mince en matière plastique, ledit contenant présentant des contraintes résiduelles issues de sa fabrication à partir d'une préforme, ayant été rempli et bouché à chaud d'un contenu liquide puis refroidi une fois rempli et bouché, et étant destiné à subir un relâchement des contraintes par un traitement thermique, **caractérisé en ce qu'**il comprend une étape préalable à celle du traitement thermique qui consiste à exercer un effort mécanique sur la surface externe de la paroi mince du contenant déformé par le remplissage à chaud pour générer une pression intérieure afin de compenser au moins la dépression à laquelle il est soumis et lui redonner sa forme initiale.

2. Procédé de traitement thermique d'un contenant à paroi mince en matière plastique selon la revendication 1, **caractérisé en ce qu'**il consiste à transférer des calories à la paroi mince dudit contenant, au plus près d'au moins une zone dudit contenant de façon à provoquer un relâchement des contraintes de la paroi mince dans cette zone et donc une mise en pression de l'intérieur du contenant dans son ensemble.

3. Procédé de traitement d'un contenant à paroi mince selon la revendication 1 ou 2, **caractérisé en ce qu'**il comprend un positionnement du contenant par son fond et son goulot de façon à assurer une mise en référence dudit contenant suivant son axe longitudinal.

4. Procédé de traitement d'un contenant à paroi mince selon l'une quelconque des revendications précédentes, **caractérisé en ce qu'**il comprend au moins deux étapes de transfert de calories et une rotation du contenant entre ces deux transferts.

5. Procédé de traitement d'un contenant à paroi mince selon l'une quelconque des revendications précédentes, **caractérisé en ce qu'**il recourt à l'utilisation d'un contenant avec un fond et un goulot indéformables.

6. Dispositif de traitement thermique d'un contenant (10) à paroi mince permettant la mise en oeuvre du procédé selon l'une des revendications précédentes, **caractérisé en ce qu'**il comprend :
- un poste (20) de positionnement des contenants (10) remplis à chaud d'un contenu, par le fond (14) et le goulot (12), après refroidissement dudit contenu,
- un poste (28) de mise en pression mécanique temporaire du contenant, et
- un poste (40) de traitement thermique du contenant sans chauffage du contenu pour provoquer le relâchement des contraintes résiduelles dudit contenant et provoquer son rétreint,
- un poste de relâchement de la pression mécanique temporaire.

7. Dispositif de traitement thermique d'un contenant (10) à paroi mince selon la revendication 6, **caractérisé en ce que** le poste (20) de positionnement comprend une unité (22) de réception comportant une coupelle (24) de guidage et de mise en rotation dans laquelle repose le fond (14) du contenant et une tête (26) de guidage recevant le goulot (12), le centre de chaque coupelle (24) étant aligné avec le centre de la tête (26) de façon à définir un axe longitudinal X-X prévu pour être confondu avec l'axe longitudinal du contenant.

8. Dispositif de traitement thermique d'un contenant (10) à paroi mince selon la revendication 6 ou 7, **caractérisé en ce que** le poste (28) de mise en pression mécanique du contenant comprend des moyens (30) mécaniques de mise en pression du contenant, ces moyens (30) mécaniques de mise en pression comprenant des presseurs (32) composés de patins (34) d'appui prévus pour venir se plaquer sur la paroi mince du contenant (10) et des moyens (36) pour exercer un effort sur ces patins.

9. Dispositif de traitement thermique d'un contenant (10) à paroi mince selon la revendication 6, 7 ou 8, **caractérisé en ce que** le poste (40) de traitement thermique comprend au moins une paroi (42) chaude apte à permettre le relâchement des contraintes figées dans le contenant lors de la fabrication, mobile entre deux positions la première dite d'ouverture, écartée du contenant (10) et la seconde dite de fermeture, proche et/ou au contact du contenant (10).

10. Dispositif de traitement thermique d'un contenant (10) à paroi mince selon la revendication 9, **caractérisé en ce que** cette paroi (42) chaude couvre au moins une zone du contenant.

11. Dispositif de traitement thermique d'un contenant (10) à paroi mince selon la revendication 10, **caractérisé en ce que** la paroi (42) est une coquille (44) de forme conjuguée de celle de la zone concernée du contenant.

12. Dispositif de traitement thermique d'un contenant (10) à paroi mince selon la revendication 11, **caractérisé en ce que** la coquille (44) comporte deux demi coquilles (44-1,44-2) de façon à venir se positionner autour du contenant dans sa position de fermeture.

13. Dispositif de traitement thermique d'un contenant (10) à paroi mince selon l'une quelconque des revendications 6 à 12, **caractérisé en ce que** le fond et le goulot dudit contenant sont indéformables.

## Claims

1. A treatment process for a thin-walled container made of plastics material, said container having residual stresses resulting from its manufacture from a preform, having been filled and stoppered in the hot state with liquid contents, then cooled once filled and stoppered, and being intended to undergo relaxation of the stresses by a heat treatment, **characterised in that** it comprises a step prior to that of the heat treatment which consists of exerting a mechanical force on the outer surface of the thin wall of the container which is deformed by the hot filling in order to generate an internal pressure in order to compensate for at least the underpressure to which it is subjected and to restore its initial form thereto.

2. A heat treatment process for a thin-walled container made of plastics material according to Claim 1, **characterised in that** it consists of transferring heat to the thin wall of said container, close to at least one zone of the container so as to cause relaxation of the stresses of the thin wall in this zone and hence pressurisation of the interior of the container in its entirety.

3. A treatment process for a thin-walled container according to Claim 1 or 2, **characterised in that** it comprises positioning of the container by its bottom and its neck so as to ensure referencing of said container along its longitudinal axis.

4. A treatment process for a thin-walled container according to any one of the preceding claims, **characterised in that** it comprises at least two heat transfer stages and rotation of the container between these two transfers.

5. A treatment process for a thin-walled container according to any one of the preceding claims, **characterised in that** it makes use of a container with a bottom and a neck which are non-deformable.

6. A heat treatment device for a thin-walled container (10) permitting the implementation of the process according to one of the preceding claims, **characterised in that** it comprises:
- a station (20) for positioning containers (10) hot-filled with contents by the bottom (14) and the neck (12), after cooling said contents,
- a station (28) for temporary mechanical pressurisation of the container, and
- a station (40) for heat treatment of the container without heating the contents to cause the relaxation of the residual stresses of said container and to cause the necking thereof,
- a station for relaxation of the temporary mechanical pressure.

7. A heat treatment device for a thin-walled container (10) according to Claim 6, **characterised in that** the positioning station (20) comprises a receiving unit (22) comprising a cup (24) for guidance and rotation in which the bottom (14) of the container rests and a guide head (26) which receives the neck (12), the centre of each cup (24) being aligned with the centre of the head (26) so as to define a longitudinal axis X-X provided to be merged with the longitudinal axis of the container.

8. A heat treatment device for a thin-walled container (10) according to Claim 6 or 7, **characterised in that** the station (28) for mechanical pressurisation of the container comprises mechanical pressurisation means (30) for the container, these mechanical pressurisation means (30) comprising pressing devices (32) composed of bearing pads (34) which are provided for flattening against the thin wall of the container (10) and means (36) for exerting a force on these pads.

9. A heat treatment device for a thin-walled container (10) according to Claim 6, 7 or 8, **characterised in that** the heat treatment station (40) comprises at least one hot wall (42) capable of permitting the relaxation of the stresses set in the container during manufacture, which is movable between two positions, the first, referred to as "opening position", away from the container (10), and the second, referred to as "closing position", close to and/or in contact with the container (10).

10. A heat treatment device for a thin-walled container (10) according to Claim 9, **characterised in that** this hot wall (42) covers at least one zone of the container.

11. A heat treatment device for a thin-walled container (10) according to Claim 10, **characterised in that** the wall (42) is a shell (44) of a form mated with that of the zone of the container in question.

12. A heat treatment device for a thin-walled container (10) according to Claim 11, **characterised in that** the shell (44) comprises two half-shells (44-1, 2-44) so that they can be positioned around the container in its closing position.

13. A heat treatment device for a thin-walled container (10) according to any one of Claims 6 to 12, **characterised in that** the bottom and the neck of said container are non-deformable.

## Patentansprüche

1. Verfahren zur Behandlung eines dünnwandigen Kunststoffbehälters, wobei der besagte Behälter Restspannungen aufweist, die auf seine Herstellung aus einem vorgeformten Rohling zurückzuführen sind, der mit einem flüssigen Inhalt heiß befüllt und verschlossen, anschließend, nachdem er befüllt und verschlossen ist, abgekühlt wird und dazu vorgesehen sei, um durch eine thermische Behandlung ein Nachlassen der Spannungen zu erfahren, **dadurch gekennzeichnet, dass** es einen dieser thermischen Behandlung vorangehenden Verfahrensschritt umfasst, der darin besteht, eine mechanische Kraft auf die Außenoberfläche der Dünnwand des durch das Heißbefüllen verformten Behälters auszuüben zum Aufbau eines inneren Drucks, um zumindest den Unterdruck, dem er ausgesetzt ist, auszugleichen und ihm seine anfängliche Gestaltungsform zurück zu verleihen.

2. Verfahren zur thermischen Behandlung eines dünnwandigen Kunststoffbehälters nach Anspruch 1, **dadurch gekennzeichnet, dass** es darin besteht, an die Dünnwand des besagten Behälters, am nähest zumindest an einen Bereich des besagten Behälters Kalorien zu übertragen, derart, um ein Nachlassen der Spannungen der Dünnwand in diesem Bereich und somit ein Unterdrucksetzen des Innenraums des gesamten Behälters zu bewirken.

3. Verfahren zur Behandlung eines dünnwandigen Behälters nach Anspruch 1 oder 2, **dadurch gekennzeichnet, dass** es eine Positionierung des Behälters über seinen Boden und seinen Hals umfasst, derart, um ein Ausrichten des besagten Behälters folgend seiner Längsachse zu sichern.

4. Verfahren zur Behandlung eines dünnwandigen Behälters nach irgendeinem der vorgehenden Ansprüche, **dadurch gekennzeichnet, dass** es zumindest zwei Verfahrensschritte zur Kalorienübertragung und eine Drehung des Behälters zwischen diesen zwei Übertragungen umfasst.

5. Verfahren zur Behandlung eines dünnwandigen Behälters nach irgendeinem der vorgehenden Ansprüche, **dadurch gekennzeichnet, dass** es die Verwendung eines Behälters mit einem formbeständigen Boden und einem formbeständigen Hals in Anspruch nimmt.

6. Vorrichtung zur thermischen Behandlung eines dünnwandigen Behälters (10), die die Umsetzung des Verfahrens nach einem der vorgehenden Ansprüche erlaubt, **dadurch gekennzeichnet, dass** sie Folgendes umfasst:
- eine Station (20) zur Positionierung der mit einem Inhalt heiß befüllten Behälter (10) über den Boden (14) und den Hals (12) nach dem Abkühlen des besagten Inhalts;
- eine Station (28) zur zeitweiligen mechanischen Druckbeaufschlagung des Behälters, und
- eine Station (40) zur thermischen Behandlung des Behälters ohne Erhitzung des Inhalts, um das Nachlassen der Restspannungen des besagten Behälters zu bewirken und sein Schrumpfen zu verursachen;
- eine Station zum Nachlassen des zeitweiligen mechanischen Drucks.

7. Vorrichtung zur thermischen Behandlung eines dünnwandigen Behälters (10) nach Anspruch 6, **dadurch gekennzeichnet, dass** die Station (20) zum Positionieren eine Aufnahmeeinheit (22), die eine Kappe (24) zum Führen und Drehen umfasst, in welcher der Boden (14) des Behälters ruht, und einen Führungskopf (26), der den Hals (12) aufnimmt, umfasst, wobei der Mittelpunkt von einer jeden Kappe (24) mit dem Mittelpunkt des Kopfes (26) passend ausgerichtet sei, derart, um eine Längsachse X-X zu bilden, die vorgesehen ist, um mit der Längsachse des Behälters zusammenfallend zu sein.

8. Vorrichtung zur thermischen Behandlung eines dünnwandigen Behälters (10) nach Anspruch 6 oder 7, **dadurch gekennzeichnet, dass** die Station (28) zur mechanischen Druckbeaufschlagung des Behälters mechanische Mittel (30) zur Druckbeaufschlagung des Behälters umfasst, wobei diese mechanischen Mittel (30) zur Druckbeaufschlagung Quetschwalzen (32) umfassen, die aus Auflagekufen (34), vorgesehen, um die Dünnwand des Behälters (10) zu drücken, und Mitteln (36), um auf diese Kufen eine Kraft auszuüben, bestehen.

9. Vorrichtung zur thermischen Behandlung eines dünnwandigen Behälters (10) nach Anspruch 6, 7 oder 8, **dadurch gekennzeichnet, dass** die Station (40) zur thermischen Behandlung zumindest eine Heißwand (42) umfasst, die geeignet ist, um das Nachlassen der im Behälter bei der Herstellung erstarrten Spannungen zu ermöglichen, die zwischen zwei Positionen bewegbar ist - einer ersten Position, die als Öffnungsposition bezeichnet wird, die von dem Behälter (10) entfernt ist, und der zweiten Position, die als Schließungsposition bezeichnet wird, die nahe an der Oberfläche des Behälters (10) ist und/oder mit dieser in Berührung steht.

10. Vorrichtung zur thermischen Behandlung eines dünnwandigen Behälters (10) nach Anspruch 9, **dadurch gekennzeichnet, dass** diese Heißwand (42) zumindest einen Bereich des Behälters bedeckt.

11. Vorrichtung zur thermischen Behandlung eines dünnwandigen Behälters (10) nach Anspruch 10, **dadurch gekennzeichnet, dass** die Wand (42) eine Schale (44) mit einer Form ist, die jener des betreffenden Bereichs des Behälters entsprechend angepasst ist.

12. Vorrichtung zur thermischen Behandlung eines dünnwandigen Behälters (10) nach Anspruch 11, **dadurch gekennzeichnet, dass** die Schale (44) zwei Schalenhälften (44-1, 44-2) umfasst, derart, um in ihrer Schließungsposition sich um den Behälter herum zu positionieren.

13. Vorrichtung zur thermischen Behandlung eines dünnwandigen Behälters (10) nach irgendeinem der Ansprüche 6 bis 12, **dadurch gekennzeichnet, dass** der Boden und der Hals des besagten Behälters nicht deformierbar sind.
